# EUROPÄISCHE PATENTSCHRIFT

(11) **EP 0 532 892 B1**
(45) Veröffentlichungstag und Bekanntmachung des Hinweises auf die Patenterteilung: **02.11.1995**
(21) Anmeldenummer: 92113382.3
(22) Anmeldetag: 06.08.1992
(51) Int. Cl.: B24B 13/00

(54) **Anlage zum Schleifen der optischen Oberflächen und/oder des Umfangsrandes von Brillengläsern**
Equipment for grinding the optical surfaces and/or the edges of spectacle glasses
Installation pour le meulage des surfaces optiques et/ou des bords de verres de lunettes

(30) Priorität: 16.08.1991 DE 4127094
(43) Veröffentlichungstag der Anmeldung: 24.03.1993
(73) Patentinhaber: Wernicke & Co. GmbH, 40231 Düsseldorf (DE)
(72) Erfinder: Gottschald, Lutz, Dr.-Ing., W-4005 Meerbusch 2 (DE)
(74) Vertreter: Rehders, Jochen, Dipl.-Ing.

(56) Entgegenhaltungen:
- EP-A- 0 128 779
- FR-A- 2 327 030
- FR-A- 2 483 631
- US-A- 4 760 671
- PATENT ABSTRACTS OF JAPAN vol. 13, no. 178 (M-819)26. April 1989 & JP-A-10 11 759 (OLYMPUS OPTICAL CO.).

## Beschreibung

Die Erfindung betrifft eine Anlage zum Schleifen der optischen Oberflächen und/oder des Umfangsrandes von Brillengläsern mit einer Schleifscheibe, einer drehbaren Halterung für einen Brillenglasrohling, einer Einrichtung zum Steuern des Schleifens gemäß vorgebbaren optischen Werten und/oder einer vorgebbaren Umrißgestalt des Brillenglases und einem gesteuerten Handhabungsgerät zum Aufnehmen und Positionieren des Brillenglasrohlings in die Halterung (vgl. FR-A-2 327 030).

Brillenglasrandschleifmaschinen sind bekannt und können in ihrer einfachsten Art eine Einrichtung zum Steuern des Schleifens gemäß einer vorgebbaren Umrißgestalt des Brillenglases in Form einer auf die drehbare Halterung aufgesetzten Schablone aufweisen, die der Form der Brillengestellöffnung entspricht, in die das geschliffene Brillenglas eingesetzt werden soll.

CNC-gesteuerte Brillenglasrandschleifmaschinen sind ebenfalls bereits bekannt und z. B. in der deutschen Offenlegungsschrift 33 16 619 oder der europäischen Offenlegungsschrift 0 363 281 beschrieben. CNC-gesteuerte Brillenglasschleifmaschinen, die zusätzlich auch die optischen Flächen bearbeiten, sind in der europäischen Patentschrift 0 061 918 und der deutschen Offenlegungsschrift 38 17 850 beschrieben. Bei den CNC-gesteuerten Brillenglasrandschleifmaschinen liegt die Umrißgestalt des Brillenglases in Form einer Datenmenge vor, die dazu benutzt wird, den Schleifvorgang so zu steuern, daß die vorgegebene Umrißgestalt des Brillenglases erzeugt wird.

Den rein mechanischen und den CNC-gesteuerten Brillenglasschleifmaschinen ist gemeinsam, daß das Einsetzen der Brillenglasrohlinge in die Halterung von Hand erfolgt, was zeitraubend ist und eine gewisse Geschicklichkeit erfordert.

Bevor sich der Brillenglasrohling in die drehbare Halterung einer herkömmlichen Brillenglasschleifmaschine einsetzen läßt, muß der Brillenglasrohling vorher mit einem Sauger oder Halteblock versehen werden, der entsprechend den vom Optiker ermittelten Dezentrationswerten der vorgegebenen Umrißgestalt mit Bezug auf die optische Achse des Brillenglases aufgesetzt werden muß und dazu dient, den Brillenglasrohling positionsgenau in der drehbaren Halterung festzuhalten und eine drehfeste Verbindung mit der drehbaren Halterung herzustellen.

Handelt es sich um Brillengläser mit Zylinder- oder prismatischem Schliff, ist des weiteren die Achsenlage beim Aufsetzen des Saugers oder Halteblocks und beim Einsetzen in die drehbare Halterung der Brillenglasrandschleifmaschine zu beachten.

Eine weitere Schwierigkeit tritt auf, wenn Brillenglasrohlinge als Mehrschärfengläser ausgebildet sind, da dann die Lage des Nahteils mit Bezug auf die optische Achse des Fernteils zu beachten ist.

Zum Anbringen eines Saugers oder Halteblocks wird eine Vorrichtung verwendet, mit der zunächst der Brillenglasrohling entsprechend den optischen Werten, den Dezentrationswerten und/oder der Achsenlage positioniert wird, wonach der Sauger oder Halteblock auf den positionierten Brillenglasrohling aufgesetzt wird.

Es liegt auf der Hand, daß diese Vorgehensweise zeitraubend ist und große berufliche Fertigkeit erfordert, so daß diese Tätigkeit nur von ausgebildeten Optikern durchgeführt werden kann. Durch das zeitraubende Positionieren und Blocken eines jeden Brillenglasrohlings ist jedoch der Ausnutzungsgrad der Brillenglasschleifmaschine, insbesondere wenn sie CNC-gesteuert ist, gering.

Eine aus FR-A-2 327 830 bekannte, mechanische Beschickungseinrichtung an Brillenglasrandschleifmaschinen kann die Geschicklichkeit des Optikers nicht ersetzen, da diese nur zum Beschicken genau in der optischen Achse geeignet ist.

Der Erfindung liegt die Aufgabe zugrunde, das Herstellen eines Brillenglases entsprechend einer vorgebbaren Umrißgestalt unter Berücksichtigung der optischen Daten des Brillenglases und der Dezentrationswerte für das Brillenglas im gewählten Brillengestell zu vereinfachen und zu beschleunigen, sowie dabei die Genauigkeit bei der Herstellung zu verbessern.

Ausgehend von dieser Aufgabenstellung wird für eine Anlage zum Schleifen der optischen Oberfläche und/oder des Umfangsrandes von Brillengläsern mit wenigstens einer Schleifscheibe, wenigstens einer drehbaren Halterung für einen Brillenglasrohling, wenigstens einer Einrichtung zum Steuern des Schleifens gemäß vorgebbaren optischen Werten und/oder einer vorgebbaren Umrißgestalt des Brillenglases vorgeschlagen, daß erfindungsgemäß wenigstens eine Eingabevorrichtung für die optischen Werte des Brillenglases und/oder für die Dezentrationswerte der vorgegebenen Umrißgestalt und/oder die Achsenlage und/oder die Lage des Nahteils mit Bezug auf die optische Achse eines zu schleifenden Brillenglasrohlings, wenigstens eine mit der Eingabevorrichtung verbundene Steuereinrichtung und wenigstens ein mit der Steuereinrichtung verbundenes CNC-gesteuertes Handhabungsgerät zum Aufnehmen und Positionieren des Brillenglasrohlings entsprechend den in die Eingabevorrichtung eingegebenen Werten und zum entsprechenden positionsgenauen Einsetzen des Brillenglasrohlings in die Halterung eingesetzt werden.

Das Handhabungsgerät ergreift einen Brillenglasrohling am Rand und führt ihn in die geöffnete Halterung der Brillenglasschleifmaschine.

Dabei wird das Handhabungsgerät so gesteuert, daß der Brillenglasrohling mit Bezug auf die Drehachse der Halterung entsprechend den eingegebenen Dezentrationswerten positioniert wird. Wenn die Halterung danach den Brillenglasrohling einklemmt und das Handhabungsgerät den Brillenglasrohling freigibt, läßt sich der Schleifvorgang gemäß vorgegebenen optischen Werten und/oder gemäß einer vorgebbaren Umrißgestalt des Brillenglases unter Berücksichtigung der Dezentrationswerte durchführen. Auf ein Blocken des Brillenglasrohlings vor dem Einsetzen in die Halterung in der Brillenglasrandschleifmaschine läßt sich dabei verzichten, wenn die Halterung so gestaltet ist, daß sie den mittels des Handhabungsgeräts genau positionierten Brillenglasrohling drehfest einklemmt.

Zusätzlich zu den Dezentrationswerten können durch die Eingabevorrichtung auch die Achsenlage der vorgegebenenUmrißgestalt bei Brillengläsern mit Zylinder- oder prismatischem Schliff und/oder die optischen Werte des zu schleifenden Brillenglases, nämlich bei Mehrschärfengläsern die Lage von Nahteilen berücksichtigt werden.

Die optischen Werte und die Achsenlage werden durch den Augenarzt oder Optiker für die Korrekturgläser benötigende Person ermittelt. Die Dezentrationswerte ergeben sich aus dem Pupillenabstand dieser Person im Verhältnis zum gewählten Brillengestell.

Um nun den entsprechenden Brillenglasrohling automatisch ausrichten zu können, läßt sich ein im Arbeitsbereich des Handhabungsgeräts angeordnetes Scheitelbrechwertmeßgerät verwenden, das einen Sensor und eine Datenverbindung zur Steuereinrichtung, zum Positionieren des vom Handhabungsgerät gehaltenen Brillenglasrohlings in den optischen Mittelpunkt und Registrieren der Daten des optischen Mittelpunkts für das anschließende, positionsgenaue Einsetzen des Brillenglasrohlings in die Halterung aufweist.

Eine andere Möglichkeit zum Steuern des Handhabungsgeräts kann durch eine maschinenlesbare Markierung der optischen Werte auf dem Brillenglasrohling gegeben sein. Der vom Handhabungsgerät ergriffene Brillenglasrohling läßt sich dann in den Bereich eines Sensors führen, wo die optischen Werte abgelesen werden.

Mittels einer Datenverbindung zur Steuereinrichtung läßt sich das positionsgenaue Einsetzen des Brillenglasrohlings in die Halterung in Abhängigkeit von den vom Sensor erfaßten optischen Werten und den eingegebenen Dezentrationswerten und/oder der Achsenlage steuern.

Eine größere Anzahl unterschiedlicher Brillenglasrohlinge lassen sich in einem für das Handhabungsgerät zugänglichen Aufbewahrungsbehälter anordnen, wobei für jeden der Brillenglasrohlinge eine maschinenlesbare Markierung als Adresse am Aufbewahrungsbehälter angeordnet sein kann, die von einem Sensor am Handhabungsgerät gelesen wird und über eine Datenverbindung zur Steuereinrichtung die Entnahme eines Brillenglasrohlings aus dem Aufbewahrungsbehälter entsprechend den eingegebenen optischen Werten steuert.

Der Aufbewahrungsbehälter kann dabei so gestaltet sein, daß die Brillenglasrohlinge bereits in der richtigen Lage bezüglich ihrer optischen Werte angeordnet sind und sich in dieser Lage entnehmen lassen, so daß kein zusätzlicher Steuerbefehl für die optischen Werte, nämlich insbesondere die Lage von Nahteilen im Brillenglasrohling, erforderlich ist und das Handhabungsgerät nur die Positionierung nach Dezentrationswerten und Achsenlage vorzunehmen braucht.

Es ist jedoch ebenso möglich, die Brillengasrohlinge im Aufbewahrungsbehälter beliebig anzuordnen und die Positionierung in der vorher geschilderten Art mittels maschinenlesbarer Markierungen auf dem Brillenglasrohling oder mittels eines Scheitelbrechwertmeßgeräts vorzunehmen.

Um eine positionsgenaue und drehsichere Verbindung zwischen der drehbaren Halterung in einer Brillenglasschleifmaschine zu erreichen, werden insbesondere bei herkömmlichen Brillenglasrandschleifmaschinen in der Regel Vorrichtungen zum Anbringen eines Saugers oder Halteblocks auf den Brillenglasrohling eingesetzt. Diese Vorrichtungen sind, wenn sie in der üblichen Weise eingesetzt werden, mit optischen und/oder opto-elektronischen Einrichtungen versehen, um die Brillenglasrohlinge entsprechend den optischen Werten, den Dezentrationswerten und/oder der Achsenlage ausrichten zu können.

Wird das erfindungsgemäße Handhabungsgerät in Verbindung mit einer herkömmlichen Brillenglasrandschleifmaschine verwendet, läßt sich dieses dazu benutzen, einen Brillenglasrohling positionsgenau in Abhängigkeit von den optischen Werten, den Dezentrationswerten und/oder der Achsenlage in eine sehr einfache Vorrichtung zum Anbringen eines Saugers oder Halteblocks einzubringen und den Sauger oder Halteblock am Brillenglasrohling zu befestigen. Anschließend läßt sich der Brillenglasrohling mit dem daran befestigten Sauger oder Halteblock in die Halterung einer herkömmlichen Brillenglasrandschleifmaschine einbringen und dort wiederum lagegenau fixieren.

Die Steuereinrichtung kann vorteilhafterweise einen elektronischen Rechner mit Datenspeicher umfassen und eine Datenverbindung sowohl zum Handhabungsgerät als auch zu einer Brillenglasrandschleifmaschine aufweisen, so daß die Steuereinrichtung sowohl zum Steuern des Handhabungsgeräts als auch zum Steuern der Brillenglasrandschleifmaschine verwendbar ist. Zu diesem Zweck kann die Steuereinrichtung eine Eingabevorrichtung für die Dezentrationswerte und/oder die Achsenlage und die optischen Werte des zu schleifenden Brillenglasrohlings sowie für die Umrißgestalt des Brillenglases zum Steuern des positionsgenauen Einsetzen des Brillenglasrohlings in die Halterung und des Schleifens des Brillenglases aufweisen. Die Umrißgestalt des Brillenglases läßt sich in die Steuereinrichtung auf verschiedene, an sich bekannte Weisen eingeben, z. B. durch Abtasten des gewählten Brillengestells und Weitergabe der Werte in den Rechner bzw. Datenspeicher, durch Übertragen der Daten eines bestimmten Brillengestells, die auf einer Diskette gespeichert sind oder durch Speichern einer großen Anzahl Brillengestelldaten im Datenspeicher und Abrufen der Daten eines bestimmten Brillengestells durch Eingabe einer Codenummer oder durch Ablesen dieser Codenummer von einem Strichcode.

Mit einer derartigen, einen elektronischen Rechher mit Datenspeicher umfassenden Steuereinrichtung und einem dadurch gesteuerten Handhabungsgerät läßt sich eine größere Anzahl im Arbeitsbereich des Handhabungsgeräts angeordneter Brillenglasschleifmaschinen mit Brillenglasrohlingen beschicken und entsprechend den in der Steuereinrichtung vorhandenen Daten bearbeiten. Auf diese Weise ist es möglich, für die Bearbeitung der Brillengläser Bearbeitungszentren einzurichten, die Schleifmaschinen für die optischen Flächen und Brillenglasrandschleifmaschinen unfassen und die besonders von Vorteil sind, wenn Brillen in Kaufhäusern oder Filialgeschäften angepaßt und verkauft werden.

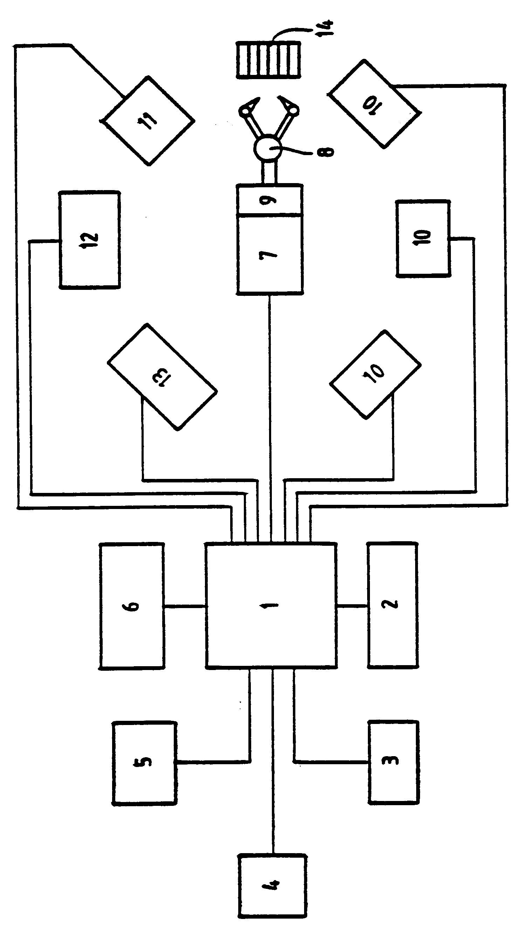

Die Erfindung wird nachstehend anhand eines in der Zeichnung dargestellten Ausführungsbeispiels in Verbindung mit mehreren Brillenglasrandschleifmaschinen des näheren erläutert.

Das Bearbeitungszentrum ist schematisch als Blockschaubild dargestellt und unfaßt eine Steuereinrichtung 1 in Form eines elektronischen Rechners mit Datenspeicher, z. B. einen Personalcomputer. Die Steuereinrichtung weist eine Eingabevorrichtung 2 in Form einer alphanumerischen Tastatur auf, mit der die Dezentrationswerte, die Achsenlage und/oder die optischen Werte des herzustelllenden Brillenglases eingegeben werden. Weitere Eingabevorrichtungen für die Steuereinrichtung 1 können aus einem Strichcodeleser 3, einem Diskettenlaufwerk 4 und/oder einer Brillengestellabtastvorrichtung 5 bestehen. Der Strichcodeleser 3 kann sowohl die Codenummer eines gegebenen Brillengestells als auch von einem entsprechend gekennzeichneten Brillenglasrohling die optischen Werte ablesen. In diesem Fall ist die Gesamtheit der digitalisierten Datenmenge für ein Brillengestell und die daraus folgende Umrißgestalt des Brillenglases bereits im Speicher der Steuereinrichtung 1 gespeichert und wird durch Eingabe der Codenummer abgerufen. Liegen die Daten für ein Brillengestell noch nicht gespeichert in der Steuereinrichtung 1 vor, lassen sich diese Daten mittels einer vom Diskettenlaufwerk 4 gelesenen Diskette in die Steuereinrichtung 1 übertragen.

Schließlich lassen sich die Datenwerte für die Umrißgestalt des herzustellenden Brillenglases anhand eines körperlich vorhandenen Brillengestells durch Abtasten dieses Brillengestells in einer Brillengestellabtastvorrichtung 5 gewinnen.

Ein Bildschirm 6 dient dazu, die eingegebenen Werte darzustellen, um sie überprüfen zu können und läßt sich auch dazu benutzen, die vorgegebene Umrißgestalt des Brillenglases abzubilden und hinsichtlich der Dezentrationswerte mit Bezug auf die Größe des Brillenglasrohlings zu überprüfen.

Mit dem Steuergerät 1 ist ein Handhabungsgerät 7, das einen Greifarm 8 zum Ergreifen eines Brillengestellrohlings aufweist, über eine Datenleitung verbunden. Ein schematisch dargestellter Sensor 9 ist am Handhabungsgerät 7 ebenfalls vorhanden. Mittels des Handhabungsgeräts 7 wird ein von dem Greifarm 8 gehaltener Brillenglasrohling in eine nicht dargestellte geöffnete Halterung in einer Brillenglasrandschleifmaschine 10 eingelegt. Eine derartige CNC-gesteuerte Brillenglasrandschleifmaschine wird von der Anmelderin z. B. mit der Typenbezeichnung CNC 90 gebaut und vertrieben. Einzelheiten dieser Brillenglasrandschleifmaschine brauchen daher nicht dargestellt zu werden.

Im dargestellten Beispiel sind drei Brillenglasrandschleifmaschinen 10 im Arbeitsbereich des Handhabungsgeräts 7 angeordnet.

Des weiteren sind im Arbeitsbereich des Handhabungsgeräts 7 ein Sensor 11, ein Scheitelbrechwertmesser 12, eine Blockvorrichtung 13 und ein Aufbewahrungsbehälter 14 in Form einer Kassette für Brillenglasrohlinge angeordnet.

In der Kassette 14 befindet sich eine größere Anzahl unterschiedlicher Brillenglasrohlinge, die auf der Kassette mittels einer maschinenlesbaren Markierung mit einer Adresse versehen sind. Mittels der Eingabevorrichtung 2 werden die Dezentrationswerte, die optischen Werte und ggf. die Achsenlage eingegeben, woraufhin sich das Handhabungsgerät 7 über die auf der Kassette 14 angegebene Adresse den entsprechenden Brillenglasrohling sucht und ergreift.

Falls die Brillenglasrohlinge in der Kassette 14 hinsichtlich ihrer optischen Werte, nämlich der Lage von Nahteilen mit Bezug auf die optische Achse in einer bestimmten Stellung angeordnet sind, bringt das Handhabungsgerät 7 den entnommenen Brillenglasrohling direkt zur Blockvorrichtung 13, richtet den Brillenglasrohling entsprechend den Dezentrationswerten und der Achsenlage aus, und der Sauger oder Halteblock wird durch die Steuereinrichtung 1 gesteuert auf den Brillenglasrohling aufgesetzt. Eine derartige Vorrichtung zum Anbringen eines Saugers oder Halteblocks ist in der Gebrauchsmusterschrift G 87 02 562.0 der Anmelderin beschrieben.

Von der Vorrichtung 13 wendet sich das Handhabungsgerät 7 nunmehr einer der Brillenglasrandschleifmaschinen 10 zu und setzt den Brillenglasrohling in die Haltevorrichtung ein. Die Haltevorrichtung rastet positionsgenau in den Sauger oder den Halteblock am Brillenglasrohling ein, der Greifarm 8 löst sich vom Brillenglasrohling, und das Handhabungsgerät 7 verläßt den Bereich der Brillenglasrandschleifmaschine 10, die durch die Steuereinrichtung 1 gesteuert den Brillenglasrohling entsprechend der vorgegebenen Umrißgestalt des Brillenglases fertigschleift.

Indessen kann sich das Handhabungsgerät 7 erneut der Kassette 14 zuwenden, einen weiteren Brillenglasrohling entnehmen und diesen in der vorbeschriebenen Weise für die zweite Brillenglasrandschleifmaschine 10 handhaben.

Falls die Brillenglasrohlinge in der Kassette 14 nicht lagegenau eingesetzt sind, läßt sich ein Sensor 11 dazu benutzen, die Lage eines auf dem Brillenglasrohling vorhandenen Nahteils bezüglich der optischen Achse des Fernteils zu bestimmen, wenn entsprechende Informationen auf dem Brillenglasrohling in Form von maschinenlesbaren Markierungen z. B. einem Strichcode angeordnet sind. Der Sensor 11 nimmt diese Daten auf, gibt sie an die Steuereinrichtung 1 weiter, und diese Steuereinrichtung 1 veranlaßt das Handhabungsgerät 7 den Brillenglasrohling entsprechend in der Vorrichtung 13 zu positionieren. Danach erfolgt das Einlegen des Brillenglasrohlings in eine der Brillenglasrandschleifmaschinen 10 in der vorgeschriebenen Weise.

Falls sich auf dem Brillenglasrohling keine maschinenlesbaren Markierungen befinden, wird der Brillenglasrohling durch das Handhabungsgerät 7 in einen Scheitelbrechwertmesser 12 gebracht, der den Brillenglasrohling ausmißt und die ermittelten Daten an die Steuereinrichtung 1 leitet. Über die Steuereinrichtung 1 werden diese Daten in Befehle für das Handhabungsgerät 7 ungewandelt, der den Brillenglasrohling entsprechend diesen Daten lagegenau positioniert, in die Vorrichtung 13 einlegt und nach Aufbringen eines Saugers oder Halteblocks zu einer der Brillenglasrandschleifmaschinen 10 bringt.

Wie bereits erwähnt, handelt es sich bei den Brillenglasrandschleifmaschinen 10 vorzugsweise um CNC-gesteuerte Brillenglasrandschleifmaschinen des Typs CNC 90 der Anmelderin. Diese Brillenglasrandschleifmaschinen werden von der Steuereinrichtung 1 angesteuert und führen das Schleifen des Brillenglasrohlings bis zur vorgebenen Umrißgestalt des Brillenglases automatisch durch. Das Handhabungsgerät 7 läßt sich jedoch auch mit einfachen Brillenglasrandschleifmaschinen, die nicht CNC-gesteuert sind und von der Anmelderin mit der Typenbezeichnung C 90 hergestellt und vertrieben werden, verwenden. In diesem Fall wird das Schleifen der vorgegebenen Umrißgestalt des Brillenglases anhand einer diese Umrißgestalt aufweisenden Schablone durchgeführt, die auf die drehbare Halterung für den Brillenglasrohling aufgesetzt wird. Die Steuereinrichtung 1 sendet dann nur einen Steuerbefehl zum Schließen der Halterung für den Brillenglasrohling, nachdem das Handhabungsgeräts 7 den Brillenglasrohling lagegenau zwischen die geöffnete Halterung gebracht hat und gibt den Startbefehl für den Schleifvorgang. Der Schleifvorgang selbst läuft ebenfalls vollautomatisch, jedoch hinsichtlich der Brillenglasform schablonengesteuert ab.

Nach Beendigung des Schleifvorganges kann das fertiggeschliffene Brillenglas entweder von Hand oder durch das Handhabungsgerät 7 aus der Brillenglasrandschleifmaschine 10 entnommen und in das betreffende Brillengestell eingesetzt werden.

Beim dargestellten Ausführungsbeispiel wird auf den Brillenglasrohling in der Blockvorrichtung ein Sauger oder Halteblock aufgesetzt. Hierauf läßt sich indessen verzichten, wenn die Halterung so gestaltet ist, da sie den mittels des Handhabungsgeräts genau positionierten Brillenglasrohling drehfest ohne weitere Hilfsmittel einklemmt.

Die beschriebenen Brillenglasrandschleifmaschinen 10 können zum Teil durch Schleifmaschinen für die optischen Flächen von Brillengläsern ersetzt werden oder aus Maschinen bestehen, mit denen sich sowohl die optischen Flächen als auch der Rand bearbeiten lassen.

## Patentansprüche

1. Anlage zum Schleifen der optischen Oberflächen und/oder des Umfangsrandes von Brillengläsern mit
- wenigstens einer Schleifscheibe,
- wenigstens einer drehbaren Halterung für einen Brillenglasrohling,
- wenigstens einer Einrichtung zum Steuern des Schleifens gemäß vorgebbaren optischen Werten und/oder einer vorgebbaren Umrißgestalt des Brillenglases,
- wenigstens einer Eingabevorrichtung (2) für die optischen Werte des Brillenglases und/oder für die Dezentrationswerte der vorgegebenen Umrißgestalt und/oder die Achsenlage und/oder die Lage des Nahteils mit Bezug auf die optische Achse eines zu schleifenden Brillenglasrohlings,
- wenigstens einer mit der Eingabevorrichtung (2) verbundenen Steuereinrichtung (1) und
- wenigstens einem mit der Steuereinrichtung (1) verbundenen CNC-gesteuerten Handhabungsgerät (7) zum Aufnehmen und Positionieren des Brillenglasrohlings entsprechend den in die Eingabevorrichtung (2) eingegebenen Werten und zum entsprechenden positionsgenauen Einsetzen des Brillenglasrohlings in die Halterung.

2. Anlage nach Anspruch 1, **gekennzeichnet durch** eine Eingabevorrichtung (2) für die Achsenlage der vorgegebenen Umrißgestalt bei Brillengläsern mit Zylinder- oder prismatischen Schliff.

3. Anlage nach Anspruch 1 oder 2, **gekennzeichnet durch** ein im Arbeitsbereich des Handhabungsgeräts (7) angeordnetes Scheitelbrechwertmeßgerät (12) mit einem Sensor und einer Datenverbindung zur Steuereinrichtung zum Positionieren des vom Handhabungsgerät (7) gehaltenen Brillenglasrohlings in den optischen Mittelpunkt und Registrieren der Daten des optischen Mittelpunkts für das anschließende positionsgenaue Einsetzen des Brillenglasrohlings in die Halterung.

4. Anlage nach Anspruch 1 oder 2, **gekennzeichnet durch** eine maschinenlesbare Markierung der optischen Werte auf dem Brillenglasrohling und einen Sensor (9, 11) zur Aufnahme der optischen Werte, eine Datenverbindung zur Steuereinrichtung (1) zum Steuern des positionsgenauen Einsetzens des Brillenglasrohlings in die Halterung in Abhängigkeit von den optischen Werten und den eingegebenen Dezentrationswerten und/oder der Achsenlage.

5. Anlage nach Anspruch 1 oder 2, **gekennzeichnet durch** eine maschinenlesbare Markierung als Adresse für jeden von einer Anzahl unterschiedlicher Brillenglasrohlinge in einem im Arbeitsbereich des Handhabungsgeräts (7) angeordneten Aufbewahrungsbehälter (14) und einen Sensor (9) am Handhabungsgerät, eine Datenverbindung zur Steuereinrichtung (1) zum Steuern der Entnahme eines Brillenglasrohlings aus dem Aufbewahrungsbehälter entsprechend den eingegebenen optischen Werten.

6. Anlage nach einem der Ansprüche 1 bis 5, **gekennzeichnet durch** eine einen elektronischen Rechner mit Datenspeicher umfassende Steuereinrichtung (1) mit einer Datenverbindung sowohl zum Handhabungsgerät (7) als auch zu einer Brillenglasschleifmaschine (10), einer Eingabevorrichtung (2, 3, 4, 5) für die optischen Werte und/oder die Dezentrationswerte und/oder die Achsenlage des zu schleifenden Brillenglasrohlings sowie für die Umrißgestalt des Brillenglases zum Steuern des positionsgenauen Einsetzen des Brillenglasrohlings in die Halterung und des Schleifens der Umrißgestalt des Brillenglases.

7. Anlage nach einem der Ansprüche 1 bis 6, **gekennzeichnet durch** ein Handhabungsgerät (7) mit einer Steuereinrichtung (1) und Eingabevorrichtung (2) sowie mehreren im Arbeitsbereich des Handhabungsgeräts angeordneten Brillenglasschleifmaschinen (10).

8. Anlage nach einem der Ansprüche 1 bis 7, **gekennzeichnet durch** eine im Arbeitsbereich des Handhabungsgeräts (7) angeordnete Vorrichtung (13) zum Anbringen eines Saugers oder Halteblocks auf den vom Handhabungsgerät positionsgenau in Abhängigkeit von den optischen Werten, den Dezentrationswerten und/oder der Achsenlage in die Vorrichtung eingelegten Brillenglasrohling.

## Claims

1. Installation for polishing the optical surface and/or the peripheral edge of spectacles having
- at least one polishing wheel,
- at least one rotatable holder for a unworked spectacle blank,
- at least one device for controlling the polishing according to prescribable optical values and/or a prescribable profile of the spectacles,
- at least one input device (2) for the optical values of the spectacles and/or for the decentring values of the prescribed profile and/or the axial position and/or the position of the reading segment in relation to the optical axis of an unworked spectacle blank to be polished,
- at least one control device (1) connected to the input device (2),
- at least one computer numerically controlled handling device (7) connected to the control device (1) for receiving and positioning the unworked spectacle blank according to the values entered into the input device (2) and for the corresponding precise insertion of the unworked spectacle blank into the holder.

2. Installation according to Claim 1, characterised by an input device (2) for the axial position of the prescribed profile of spectacles with a cylindrical or prismatic finish.

3. Installation according to Claim 1 or 2, characterised by a vertex refractometer (12) disposed in the working region of the handling device (7) with a sensor and a data connection to the control device for positioning the unworked spectacle blank held by the handling device (7) in the optical centre and registering data of the optical centre for the subsequent accurate insertion of the unworked spectacle blank into the holder.

4. Installation according to Claim 1 or 2, characterised by a machine-readable marking of the optical values on the unworked spectacle blank and a sensor (9, 11) for receiving the optical values, a data connection to the control device (1) for controlling the accurate insertion of the unworked spectacle blank into the holder depending on the optical values and the input decentring values and/or the axial position.

5. Installation according to Claim 1 or 2, characterised by a machine-readable marking as an address for each of a number of different unworked spectacle blanks in a storage container (14) disposed in the working region of the handling device (7) and a sensor (9) on the handling device, a data connection to the control device (1) for controlling the removal of an unworked spectacle blank from the storage container according to the given optical values.

6. Installation according to one of Claims 1 to 5, characterised by a an electronic computer with a data store comprising a control device (1) with a data connection both to the handling device (7) and to a spectacle polishing machine (10), an input device (2, 3, 4, 5) for the optical values and/or the decentring values and/or the axial position of the unworked spectacle blank to be polished and for the profiling of the spectacles for controlling the accurate insertion of the unworked spectacle blank in the holder and the polishing of the profile of the spectacles.

7. Installation according to one of Claims 1 to 6, characterised by a handling device (7) with a control device (1) and input device (2) as well as several spectacle polishing machines (10) disposed in the working region of the handling device.

8. Installation according to one of Claims 1 to 7, characterised by a device (13) arranged in the working region of the handling device (7) for attaching a suction device or retaining block on the unworked spectacle blank inserted by the handling device precisely into the device depending on the optical values the decentring values and/or the axial position.

## Revendications

1. Installation pour meuler les surfaces optiques et/ou le bord périphérique de verres de lunettes comportant
- au moins une machine de meulage,
- au moins un support rotatif pour une ébauche de verre de lunettes,
- au moins un dispositif pour commander le meulage selon des valeurs optiques prédéterminées et/ou un contour prédéterminé du verre de lunettes,
- au moins un dispositif d'entrée de données (2) pour les valeurs optiques du verre de lunettes et/ou pour les valeurs de décentrement du contour prédéterminé et/ou la position de l'axe et/ou la position de la partie vision de près par rapport à l'axe optique d'une ébauche de verre de lunettes à meuler,
- au moins un dispositif de commande (1) relié au dispositif d'entrée des données (2) et
- au moins un appareil de manipulation (7) à commande numérique par ordinateur pour recevoir et positionner l'ébauche de verre de lunettes en fonction des valeurs introduites dans le dispositif d'entrée des données (2) et pour placer l'ébauche de verre de lunettes dans le support avec une précision correspondante.

2. Installation sel on la revendication 1, caractérisée par un dispositif d'entrée de données (2) pour la position de l'axe du contour prédéterminé dans le cas de verres de lunettes ayant un meulage cylindrique ou prismatique.

3. Installation selon la revendication 1 ou 2, caractérisée par un fronto-focomètre (12) disposé dans l'aire de travail de l'appareil de manipulation (7), comportant un capteur et un circuit de données relié au dispositif de commande pour positionner dans le centre optique l'ébauche de verre de lunettes tenu par l'appareil de manipulation (7) et enregistrer les données du centre optique pour une exacte mise en place suivante de l'ébauche de verre de lunettes dans le support.

4. Installation selon la revendication 1 ou 2, caractérisée par un marquage, exploitable par une machine, des valeurs optiques sur l'ébauche de verre de lunettes, et par un capteur (9, 11) pour saisir les valeurs optiques, par un circuit de données relié au dispositif de commande (1) pour commander la mise en place précise de l'ébauche de verre de lunettes dans le support en fonction des valeurs optiques et des valeurs de décentrement entrées et/ou de la position de l'axe.

5. Installation selon la revendication 1 ou 2, caractérisée par un marquage exploitable par la machine, en tant qu'adresse pour chacune d'un certain nombre d'ébauches de verres de lunettes variées dans un bac de réserve (14) disposé dans l'aire de travail de l'appareil de manipulation (7), et par un capteur (9) sur l'appareil de manipulation, par un circuit de données relié au dispositif de commande (1) pour commander le prélèvement d'une ébauche de verre de lunettes dans le bac de réserve en fonction des valeurs optiques entrées.

6. Installation selon l'une des revendications 1 à 5, caractérisé par un dispositif de commande (1) comportant un ordinateur électronique avec mémoire de données, un circuit de données relié aussi bien à l'appareil de manipulation (7) qu'à une machine pour meuler les verres de lunettes (10), un dispositif d'entrée de données (2, 3, 4, 5) pour les valeurs optiques et/ou les valeurs de décentrement et/ou la position de l'axe de l'ébauche de verres de lunettes à meuler, ainsi que pour le contour du verre de lunettes, pour commander la mise en place précise de l'ébauche de verre de lunettes dans le support et le meulage du contour du verre de lunettes.

7. Installation selon l'une des revendications 1 à 6, caractérisée par un appareil de manipulation (7) avec un dispositif de commande (1) et un dispositif d'entrée de données (2), ainsi que par plusieurs machines pour meuler les verres de lunettes (10) disposées dans l'aire de travail de l'appareil de manipulation.

8. Installation selon l'une des revendications 1 à 7, caractérisée par un dispositif (13) disposé dans l'aire de travail de l'appareil de manipulation (7) pour appliquer un suceur ou bloc de maintien sur l'ébauche de verre de lunettes mise en place avec précision dans le dispositif par l'appareil de manipulation selon les valeurs optiques, les valeurs de décentrement et/ou la position de l'axe.
